# EUROPÄISCHE PATENTANMELDUNG

(11) **EP 4 516 573 A1**
(43) Veröffentlichungstag der Anmeldung: **05.03.2025**
(21) Anmeldenummer: 24189988.9
(22) Anmeldetag: 22.07.2024
(51) Int. Cl.: B60L 53/14, B60L 53/18, B60L 53/30, B60L 53/31, B60L 53/62, B60L 53/67

(54) **KOPFBAUGRUPPE ZUR ANBINDUNG EINER MEHRZAHL ÖRTLICH ABGESETZTER LADEMODULE, LADEMODUL UND LADESYSTEM**

(30) Priorität: 25.08.2023 DE 102023208172
(71) Anmelder: Siemens Aktiengesellschaft, 80333 München (DE)
(72) Erfinder: Bode, Sebastian, 59229 Ahlen (DE)
(74) Vertreter: Siemens Patent Attorneys

(57) **Zusammenfassung**

Erfindungsgemäß wird ein modulares Ladesystem mit einer Kopfbaugruppe zur Anbindung einer Mehrzahl örtlich abgesetzter Lademodule vorgeschlagen. Das erfindungsgemäße Lademodul umfasst eine Messvorrichtung zur Messung mindestens einer elektrischen Größe und zur Übertragung eines Werts der gemessenen elektrischen Größe an die Kopfbaugruppe. Das Lademodul ist mit einen geringen technischen Aufwand ausgestattet, um diesen technischen Aufwand stattdessen in die Kopfbaugruppe zu verlagern, welche innerhalb der Ladeinfrastruktur beispielsweise lediglich einmal oder zumindest nur in geringer Anzahl vorgesehen ist. Für Ladesysteme mit einer Vielzahl an mit Lademodulen ausgestatten Ladepunkten, bei denen der technische Aufwand für einen einzelnen Ladepunkt möglichst gering zu halten ist, trägt das erfindungsgemäße modulare Ladesystem zu einer erheblichen Reduzierung dieses benötigten technischen Aufwand bei, sowohl in finanzieller Hinsicht als auch im Hinblick auf den benötigten Installationsraum. Gleichzeitig wird ungeachtet der Reduzierung des benötigten technischen Aufwands eine im Vergleich zu gängigen Ladepunkten gleichbleibend hohe Messsicherheit aufrechterhalten, welche mindestens zur Plausibilisierung fahrzeugseitig festgestellter Werte genutzt werden kann.

## Beschreibung

Die Erfindung betrifft eine Kopfbaugruppe zur Anbindung einer Mehrzahl örtlich abgesetzter Lademodule, ein Lademodul sowie ein Ladesystem.

Unter dem Begriff »Plaza Charging« hat sich eine Bezeichnung für eine Ladeinfrastruktur etabliert, durch die ein elektrisches Laden einer größeren Anzahl an Elektrofahrzeugen ermöglicht wird, wobei aufgrund einer längeren oder unbestimmten Verweildauer der Elektrofahrzeuge weder die Zeitdauer der Ladung noch eine individuelle Erfassung der jeweiligen Ladenergie kritisch sind. Ein solches Plaza Charging wird beispielweise in Fuhrparks eingesetzt, bei denen dort abgestellte Elektrofahrzeuge während ihrer Abstelldauer elektrisch geladen werden und die hierfür benötigte Ladeenergie nicht im Einzelnen abgerechnet werden muss. Auch bei anderen Großparkplätzen oder Parkhäusern kann eine elektrische Aufladung als zusätzliche Dienstleistung gehandhabt und angeboten werden, wobei die Ladenergie etwa kostenlos zur Verfügung gestellt wird, alternativ auch pauschal oder zeitabhängig, etwa in Verbindung mit einem Entgelt für die Abstelldauer, bereitgestellt wird.

Eine Ausstattung ganzer Parkhäuser und anderer Großparkflächen mit Ladeinfrastruktur gehört zu den wirtschaftlich komplexeren Vorhaben innerhalb der Elektromobilität. Zwar wird die Notwendigkeit einer solchen Ausstattung im Hinblick auf eine Sektorenkopplung und netzdienliche Steuerung von Ladevorgängen durchaus anerkannt. Indes sind wirtschaftliche Anreize zur Umsetzung dieser Ladeinfrastruktur eher gering, da eine Auslastung angesichts hoher Standzeiten im Verhältnis zur geladenen Energie meist als niedrig einzuschätzen ist.

Die Erfindung ist demgegenüber vor die Aufgabe gestellt, eine Ladeinfrastruktur für eine Vielzahl an Ladepunkten anzugeben, bei dem der technische Aufwand für einen einzelnen Ladepunkt möglichst gering ist.

Die Aufgabe wird durch eine Kopfbaugruppe zur Anbindung einer Mehrzahl örtlich abgesetzter Lademodule sowie durch ein modulares Ladesystem mit den Merkmalen der unabhängigen Patentansprüche gelöst. An jedem Ladepunkt kann ein erfindungsgemäßes Lademodul vorgesehen sein. Ein Ladepunkt ist ein Ort, an dem ein oder mehrere Energiespeicher von genau einer dort abgestellten zumindest teilweise elektrisch angetriebenen Transportmaschine zur selben Zeit geladen werden können.

Das erfindungsgemäße Lademodul wird zum elektrischen Laden oder Beladen eines Energiespeichers einer zumindest teilweise elektrisch angetriebenen Transportmaschine, beispielsweise Elektrofahrzeug, eingesetzt. Jedes Lademodul ist für eine örtlich abgesetzte Verbindung an einer jeweiligen oder vorzugsweise gemeinsamen Kopfbaugruppe vorgesehen, an der die Ladepunkte nach einem Prinzip eines modularen Systems angeschlossen sind. Eine solche örtlich abgesetzte Verbindung kann beispielsweise durch eine Reihenverbindung mittels Stromschienen realisiert werden, bei der jeweilige Betriebsanschlüsse der Lademodule mit einer Stromquelle der Kopfbaugruppe parallelgeschaltet werden, so dass an den Betriebsanschlüssen der angeschlossenen Lademodule ein im Wesentlichen gleicher Betrag einer elektrischen Spannung anliegt. Alternativ ist auch ein ringförmiger Anschluss denkbar, bei dem der jeweilige Betriebsanschlüsse der Lademodule mit einer Spannungsquelle der Kopfbaugruppe in Reihe geschaltet sind, so dass durch die angeschlossenen Lademodule im Wesentlichen der gleiche Betrag einer elektrischen Stromstärke fließt. Auch Mischformen mit hybriden Reihen- und Parallelschaltungen in mehreren Zweigen können im Rahmen einer solchen örtlich abgesetzte Verbindung gebildet sein.

Das erfindungsgemäße Lademodul umfasst einen elektrischen Betriebsanschluss zur Stromversorgung des Lademoduls durch die Kopfbaugruppe. Der Betriebsanschluss umfasst zumindest zwei Leiter. Zur Stromversorgung wird vorzugsweise Wechselstrom eingesetzt.

Das erfindungsgemäße Lademodul umfasst des Weiteren einen Ladeanschluss zum elektrischen Laden oder Beladen des Energiespeichers der Transportmaschine. Der Ladeanschluss umfasst dabei ein fest an das Lademodul angeschlagenes Ladekabel, eine Ladebuchse zum Einstecken eines Ladekabels oder auch Vorrichtungen zum induktiven Laden oder Entladen der zumindest teilweise elektrisch angetriebenen Transportmaschine. Der elektrische Ladeanschluss umfasst zumindest zwei Leiter. Heute eingesetzte zumindest teilweise mit elektrischer Energie angetriebene Transportmaschinen sind üblicherweise in der Lage, Wechselstrom in zum Laden der Batterie benötigten Gleichstrom umzusetzen und eine von einem Typ des Energiespeichers und dessen Ladezustand abhängige Höhe einer Gleichspannung bereitzustellen.

Das erfindungsgemäße Lademodul umfasst des Weiteren eine zumindest zwei Leiter umfassende elektrische Schnittstelle zur Übertragung von Steuersignalen oder Messwerten. Wenngleich heute überwiegend einer Implementierung digitaler Schnittstellen der Vorzug gegeben wird, kann diese elektrische Schnittstelle zur Übertragung von Steuersignalen oder Messwerten auch analog ausgebildet sein, um, der Erfindung zugrundeliegenden Aufgabe entsprechend, den technischen Aufwand für einen einzelnen Ladepunkt möglichst gering zu halten. Die elektrische Schnittstelle kann hier auch als Flachbandleitung ausgeführt werden, welche optional auch zur Ansteuerung von Schützen geeignet ist.

Bei einer im Folgenden beschriebenen Messung einer elektrischen Größe und Übertragung eines Werts einer gemessenen elektrischen Größe - beispielsweise Stromstärke, elektrische Spannung, elektrische Leistung etc. - an die Kopfbaugruppe kann eine Übertragung dieses Werts auch über eine analoge Schnittstelle erfolgen, beispielsweise durch Übertragung des Werts durch einen entsprechend eingestellten elektrischen Strom mittels entsprechender Verschaltung eines Operationsverstärkers oder durch eine elektrische Spannung mittels Spannungsfolgerschaltung. Letzteres kann insbesondere die Synchronisation einzelner Messungen verbessern.

Alternativ oder zusätzlich kann die elektrische Schnittstelle zur Übertragung von Steuersignalen oder Messwerten auch digital ausgebildet sein, indem der gemessene Wert digital gemessen und ausgegeben wird, oder analog gemessen und in üblicher Weise, z.B. mittels eines Analog-Digital-Wandlers, digitalisiert wird. Anstatt einer volldigitalisierten Ausprägung über eine Ethernet-Schnittstelle kann die elektrische Schnittstelle zur Übertragung von Steuersignalen oder Messwerten auch schlichter gestaltet werden, indem Steuerbefehle oder Messwerte über Bustelegramme übertragen werden.

Schließlich umfasst das erfindungsgemäße Lademodul eine Messvorrichtung zur Messung mindestens einer elektrischen Größe und zur Übertragung eines Werts der gemessenen elektrischen Größe an die Kopfbaugruppe.

Um die Ladeinfrastruktur für eine Vielzahl an Ladepunkten möglichst preiswert zu gestalten, liegt der Erfindung die erfinderische Grundüberlegung zugrunde, einen technischen Aufwand für die Mehrzahl an Lademodulen möglichst gering zu halten und diesen technischen Aufwand stattdessen in die Kopfbaugruppe zu verlagern, welche innerhalb der Ladeinfrastruktur beispielsweise lediglich einmal oder zumindest nur in geringer Anzahl vorgesehen ist.

Vorzugsweise werden auch weitere - im Rahmen dieser Beschreibung nicht detailliert dargestellte - Steuerungsunktionen einer herkömmlichen Ladestation dieser Kopfbaugruppe zugeordnet, um den technischen Aufwand in den Lademodulen gering zu halten. Zu diesen Steuerungsunktionen zählen beispielsweise eine Vorgabe eines Leistungsgrenzwerts bzw. Stromgrenzwerts, eine Ermittlung einer abgegebenen oder entgegengenommen elektrischen Energie aus empfangen oder eigenermittelten Messwerten, eine Verrechnung der elektrischen Energie, oder eine Anbindung an entsprechende Systeme.

Weitere Ausgestaltungen der Erfindung sind Gegenstand der abhängigen Patentansprüche.

Gemäß einer vorteilhaften Ausgestaltung des erfindungsgemäßen Lademoduls ist dessen Messvorrichtung so eingerichtet, dass die Messung der mindestens einen elektrischen Größe auf Anweisung der Kopfbaugruppe erfolgt. Diese Ausgestaltung unterstützt die Bestrebung, den technischen Aufwand in den Lademodulen möglichst gering zu halten und technischen Aufwand stattdessen in die Kopfbaugruppe zu verlagern. Zur Bestimmung der in der gesamten Ladeinfrastruktur zur Ladung eingesetzter elektrischer Energie ist eine ständige Messung elektrischer Größe in den einzelnen Lademodulen nicht notwendig. Diese erfolgt daher in vorteilhafter - energiesparender und datensparsamer - Weise auf Anweisung der Kopfbaugruppe.

Gemäß einer vorteilhaften Ausgestaltung des erfindungsgemäßen Lademoduls ist dessen Messvorrichtung so eingerichtet, dass die Messung der mindestens einen elektrischen Größe punktuell erfolgt. Unter punktuell ist zu verstehen, dass Messungen der mindestens einen elektrischen Größe nicht von allen Lademodulen durchgeführt werden, sondern innerhalb eines betrachteten Zeitraumes nur von einzelnen oder auch von keinem Lademodul. Die letzte Variante kommt vor allem in Frage, wenn eine Messung einer elektrischen Größe nur auf Anweisung der Kopfbaugruppe, beispielsweise zu Kontrollzwecken erfolgen soll. Auch diese Ausgestaltung unterstützt die Bestrebung, den technischen Aufwand in den Lademodulen möglichst gering zu halten und technischen Aufwand stattdessen in die Kopfbaugruppe zu verlagern. Zur Bestimmung der in der gesamten Ladeinfrastruktur zur Ladung eingesetzter elektrischer Energie ist eine gleichzeitige Messung elektrischer Größe in den einzelnen Lademodulen nicht notwendig. Diese erfolgt daher in vorteilhafter - energiesparender und datensparsamer - Weise auf Anweisung der Kopfbaugruppe.

Gemäß einer vorteilhaften Ausgestaltung des erfindungsgemäßen Lademoduls umfasst dieses zumindest einen Anpassungswiderstand und/oder sonstige Einrichtungen zur Pegel- und/oder Signalbeeinflussung von über den Ladeanschluss mitgeführten Datenleitungen.

Die Lademodule verfügen beispielsweise über zumindest einen Anpassungswiderstand, der genutzt werden kann, um aus einem Roh-CP-Signal ein CP-Signal gemäß IEC63851 zu erzeugen. Alternativ sind auch sonstige Einrichtungen zur Pegel- und/oder Signalbeeinflussung in Form komplexerer Schaltungen denkbar, welche nicht nur die Impedanz, sondern auch die Pegel anpassen und/oder die Flankensteilheit verbessern.

Vor dem Hintergrund, dass im Rahmen der erfindungsgemäß eingerichteten Ladeinfrastruktur, also dem erfindungsgemäßen Ladesystem, eine Mehrzahl von Transportmaschinen bzw. Elektrofahrzeugen an die Mehrzahl von Lademodulen angeschlossen sind, gewährleistet das CP-Signal eine Unterscheidbarkeit der Elektrofahrzeuge. Mit dem CP-Signal werden Zustände über dessen Spannungspegel übertragen. Eine Sollstromstärke gemäß IEC63851 wird über ein pulsweitenmoduliertes oder treppenmoduliertes Signal übertragen. Das Roh-CP-Signal liefert unter anderem eine wesentliche Information, wie hoch ein maximaler Strombezug eines einzelnen Elektrofahrzeugs. Eine Stromaufnahme des Elektrofahrzeugs wird beim Wechselstromladen vom Elektrofahrzeug gesteuert, das auch zusätzliche Widerstände hinzuschalten kann.

Gemäß einer vorteilhaften Ausgestaltung des erfindungsgemäßen Lademoduls umfasst dieses Einrichtungen zur Montage und Arretierung des Lademoduls auf eine Tragschiene bzw. Hutschiene. Hierzu befindet sich auf der Rückseite des Lademodul eine Aufnahme. Durch diese Maßnahme kann der technische Aufwand für die Installation sowie der benötigten Installationsraum des Lademoduls erheblich reduziert werden.

Im Folgenden werden weitere Ausführungsbeispiele und Vorteile der Erfindung anhand der Zeichnung näher erläutert. Dabei zeigen:
- Fig. 1: eine schematische Strukturdarstellung einer Messung einer elektrischen Größe an einem Betriebsanschluss eines Lademoduls gemäß einer Ausführungsform;
- Fig. 2: eine schematische Strukturdarstellung einer Messung einer elektrischen Größe an einem Ladeanschluss des Lademoduls;
- Fig. 3: eine schematische Strukturdarstellung einer Messung einer elektrischen Größe am Betriebsanschluss des Lademoduls gemäß einer alternativen Ausführungsform;
- Fig. 4: eine schematische Strukturdarstellung einer Messung einer elektrischen Größe am Betriebsanschluss des Lademoduls gemäß einer alternativen Ausführungsform;
- Fig. 5: einen schematischen Querschnitt durch ein Lademodul gemäß einer möglichen Ausführungsform; und;
- Fig. 6: einen schematischen Querschnitt durch ein Lademodul gemäß einer alternativen möglichen Ausführungsform.

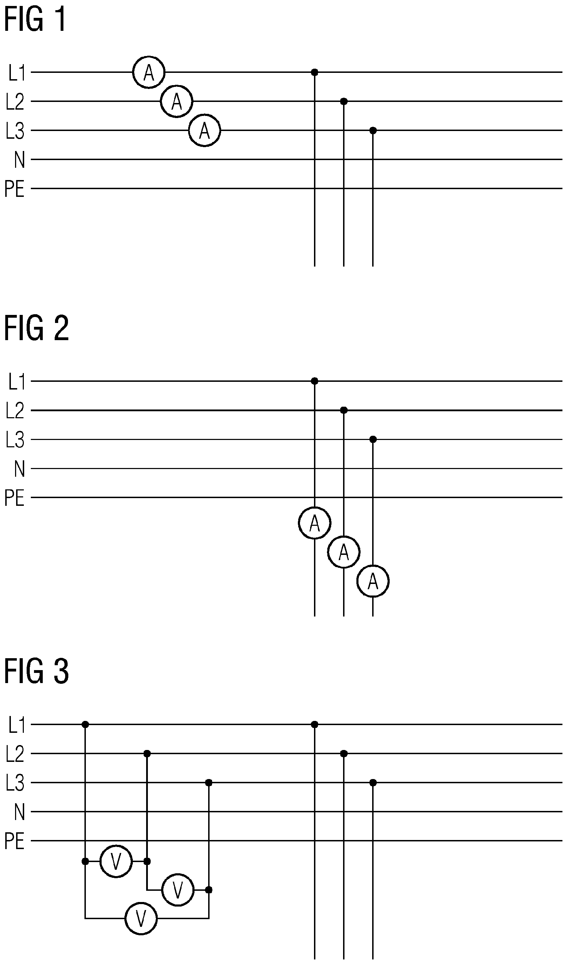

In den Fig. 1 bis Fig. 4 zeigen jeweils oben horizontal verlaufende Leiter L1,L2,L3,N,PE einen hier fünf Leiter umfassenden elektrischen Betriebsanschluss zur Wechselstromversorgung einer Vielzahl von - nicht dargestellten - Lademodulen durch eine - nicht dargestellte - Kopfbaugruppe.

Die dargestellten Leiter umfassen drei Außenleiter L1,L2,L3, einen Neutralleiter N sowie einen Schutzleiter PE zur Wechselstrom- bzw. Drehstromversorgung des Lademoduls.

Innerhalb des - nicht dargestellten - Lademoduls werden beispielsweise, wie zeichnerisch dargestellt, die drei Außenleiter L1,L2,L3 des Betriebsanschluss jeweils an einen von drei nach unten verlaufende Leiter eines elektrischen Ladeanschlusses geführt. Die Ladeanschluss ist mit einer - nicht dargestellten - Buchse oder einem - nicht dargestellten - Ladekabel zum elektrischen Laden oder Beladen der Transportmaschine elektrisch verbunden. Eine Installation zur jeweiligen Verzweigung der drei Außenleiter L1,L2,L3 des Betriebsanschluss an den jeweiligen nach unten verlaufende Leiter für den elektrischen Ladeanschlusses befindet sich in einem Gehäuse des Lademoduls, welches aus Gründen der Übersichtlichkeit nicht dargestellt ist.

Alternativ zur gezeigten Ausführung, bei der ein jeweiliger Außenleiter L1,L2,L3 des Betriebsanschluss jeweils an einen von drei Leiter des Ladeanschlusses verzweigt wird, kann auch eine einphasige Verzweigung gewählt werden, bei der beispielsweise im Sinne einer wechselweisen Sicherheitsinstallation an einem ersten Lademodul ein zweiter Außenleiter L2 mit dem Neutralleiter N, an einem darauffolgenden Lademodul ein dritter Außenleiter L2 mit dem Neutralleiter N verzweigt wird.

Die fünf Leiter L1,L2,L3,N,PE des Betriebsanschluss sind beispielsweise als jeweiligen Stromschiene, Stegleitung oder sonstige für einen Mehrfachanschluss geeignete Installationsart ausgeführt. Weitere mögliche, mit den Leitern L1,L2,L3,N,PE des Betriebsabschlusses optional mitgeführte Steuer-, Signal- und/oder Datenleitungen zur Übertragung von gemessenen Werten und/oder Steuersignalen, sind aus Übersichtsgründen zeichnerisch nicht dargestellt. Aus dem gleichen Grund sind weitere mögliche mit den Leitern des Ladeanschluss optional mitgeführte Signalleitungen bzw. Datenleitungen zeichnerisch nicht dargestellt.

Fig. 1 zeigt eine dreiphasige elektrische Strommessung durch das Lademodul, welche am Betriebsanschluss zur Wechselstromversorgung des Lademoduls durch die Kopfbaugruppe vorgenommen wird. Die Strommessung erfolgt durch ein jeweiliges Strommessgerät A, welches in einem Stromkreis eines jeweiligen Außenleiters L1,L2,L3 verschaltet ist. Neben der gezeigten Strommessung sind beliebig andere oder erweiterte Messvorrichtungen zur Messung mindestens einer elektrischen Größe einsetzbar.

Fig. 2 zeigt eine dreiphasige elektrische Strommessung an einem dreiphasigen Ladeanschluss zum Laden eines mit dem - nicht dargestellten - Lademodul verbundenen - nicht dargestellten - Energiespeichers. Der dreiphasige Ladeanschluss mit drei elektrischen Leitern führt in der Zeichnung nach unten. Die Strommessung, also die Messung des Ladestroms, erfolgt durch ein jeweiliges Strommessgerät A, welches in einem Stromkreis eines jeweiligen Leiters verschaltet ist. Neben der gezeigten Strommessung sind beliebig andere oder erweiterte Messvorrichtungen zur Messung mindestens einer elektrischen Größe einsetzbar.

Fig. 3 zeigt eine dreiphasige elektrische Spannungsmessung durch das Lademodul, welche am Betriebsanschluss zur Wechselstromversorgung des Lademoduls durch die Kopfbaugruppe vorgenommen wird. Die Spannungsmessung erfolgt durch ein jeweiliges Spannungsmessgerät V wobei ein jeweiliges Spannungsmessgerät V zwischen eines jeweiligen Außenleiters L1 und eines darauffolgenden Außenleiters L2 angeordnet ist. Neben der gezeigten Spannungsmessung sind beliebig andere oder erweiterte Messvorrichtungen zur Messung mindestens einer elektrischen Größe einsetzbar.

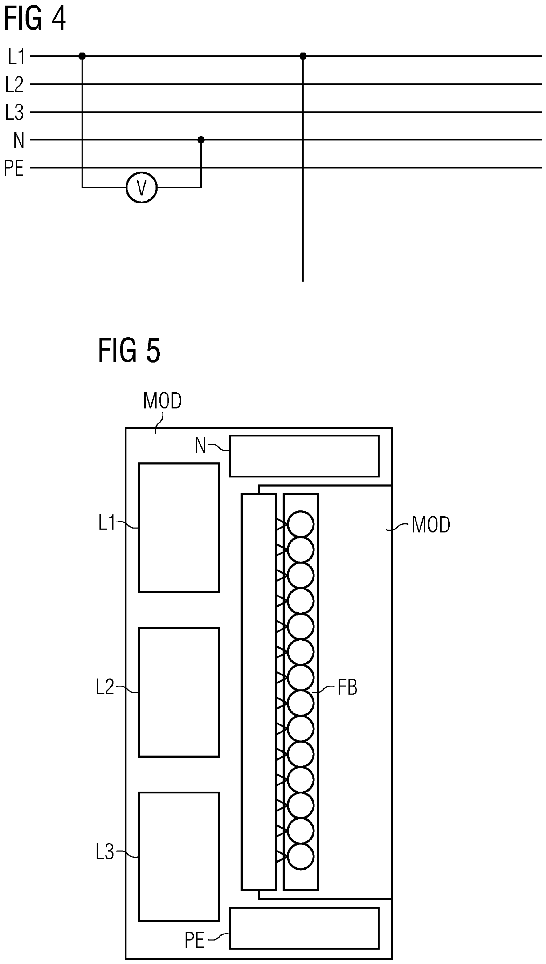

Fig. 4 zeigt eine einphasige elektrische Spannungsmessung durch das Lademodul, welche am Betriebsanschluss zur Wechselstromversorgung des Lademoduls durch die Kopfbaugruppe vorgenommen wird. Die Spannungsmessung erfolgt durch ein Spannungsmessgerät V, durch welches eine elektrische Spannung zwischen einem ersten Außenleiter L1 und dem Neutralleiter N gemessen wird.

Fig. 5 zeigt einen schematischen Querschnitt durch ein Lademodul MOD gemäß einer möglichen Ausführungsform. Das Lademodul MOD weist einen Betriebsabschlusses zur Herstellung einer Verbindung mit den fünf Leitern L1,L2,L3,N,PE auf. Weiterhin weist das Lademodul MOD einen - nicht dargestellten - Ladeanschluss zum elektrischen Laden oder Beladen der Energiespeichers auf.

Weiterhin ist ein Kontakt zu einem Flachbandkabel FB vorgesehen, durch den eine mehrere - zumindest zwei - Leiter umfassende elektrische Schnittstelle in einer selbstkontaktierenden Ausführung zur Übertragung von Steuersignalen mit der Kopfbaugruppe gebildet wird. Wenngleich im Rahmen der Erfindung auch eine Implementierung einer digitalen Schnittstelle möglich ist, kann diese Schnittstelle mit einem Flachbandkabel auch zur teilweise analogen Übertragung von Steuersignalen oder Messwerte ausgebildet sein, um den technischen Aufwand für ein einzelnes Lademodul MOD gemäß der Aufgabenstellung der Erfindung möglichst gering zu halten. Eine Verwendung analoger Signale ermöglicht dabei insbesondere, Kabelbrüche, also Unterbrechungen der elektrischen Verbindungen, z.B. in Folge einer mechanischen Beschädigung oder eines Verschleißes, durch einen Ausfall des analogen Signals zu erkennen und hierauf in geeigneter Weise zu reagieren.

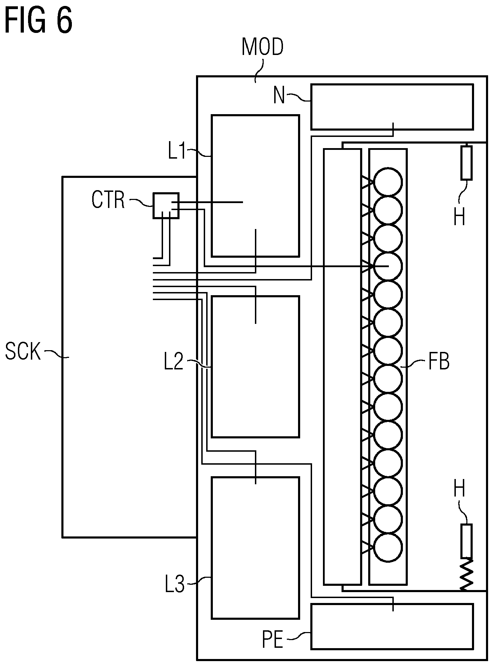

Fig. 6 zeigt einen schematischen Querschnitt durch ein Lademodul MOD gemäß einer weiteren möglichen Ausführungsform. Die weitere Figurenbeschreibung erfolgt unter weiterer Bezugnahme auf die Funktionseinheiten der Fig.5. Identische Bezugszeichen in beiden Figuren repräsentieren hierbei identische Funktionseinheiten.

Die in Fig. 6 dargestellte Ausführungsform weist eine gegenüber in Fig. 5 dargestellten Ausführungsform einerseits eine teilweise detailliertere Darstellung auf - beispielsweise sind interne Stromversorgungs- und Datenleitungen ohne Bezugszeichen dargestellt - andererseits sind gegenüber der Übersichtszeichnung der Fig. 5 weitere Baugruppen speziellerer Ausgestaltungen gezeichnet.

Das Lademodul MOD weist in dieser Ausführungsform eine Steckbuchse SCK als eine mögliche Bauform des Ladeanschluss zum elektrischen Laden oder Beladen des - nicht dargestellten - Energiespeichers der - nicht dargestellten - Transportmaschine auf. Hierbei kann es sich beispielsweise um eine - wie dargestellt - mit dem Lademodul MOD verbundene Steckbuchse SCK oder auch eine vom Lademodul MOD örtlich abgetrennte Steckbuchse SCK handeln. Die Steckbuchse ist beispielsweise gemäß IEC 61851 ausgeführt.

Weiterhin verfügt das Lademodul MOD über eine Steuereinheit CTR, welche, wie dargestellt mit mindestens einem der hier fünf Leitern L1,L2,L3,N,PE des Betriebsabschlusses zur Messung mindestens einer elektrischen Größe verbunden ist. Die Steuereinheit CTR kann auch zur Übertragung eines oder mehrerer Werte dieser gemessenen elektrischen Größe an die Kopfbaugruppe eingerichtet sein.

Weiterhin verfügt das Lademodul MOD über eine Vorrichtung zum zur Montage und Arretierung des Lademoduls auf eine Tragschiene bzw. Hutschiene. Im Beispiel der Zeichnung umfasst die Vorrichtung zwei per Federkraft arretierbare Rastnasen, welche in ein - nicht dargestelltes - Trägerelement einer Halterung oder Tragschiene eingreifen.

Zusammenfassend betrifft die Erfindung ein modulares Ladesystem mit einer Kopfbaugruppe zur Anbindung einer Mehrzahl örtlich abgesetzter Lademodule. Das erfindungsgemäße Lademodul umfasst eine Messvorrichtung zur Messung mindestens einer elektrischen Größe und zur Übertragung eines Werts der gemessenen elektrischen Größe an die Kopfbaugruppe. Das Lademodul ist mit einen geringen technischen Aufwand ausgestattet, um diesen technischen Aufwand stattdessen in die Kopfbaugruppe zu verlagern, welche innerhalb der Ladeinfrastruktur beispielsweise lediglich einmal oder zumindest nur in geringer Anzahl vorgesehen ist.

Für Ladesysteme mit einer Vielzahl an mit Lademodulen ausgestatten Ladepunkten, bei denen der technische Aufwand für einen einzelnen Ladepunkt möglichst gering zu halten ist, trägt das erfindungsgemäße modulare Ladesystem zu einer erheblichen Reduzierung dieses benötigten technischen Aufwand bei, sowohl in finanzieller Hinsicht als auch im Hinblick auf den benötigten Installationsraum. Gleichzeitig wird ungeachtet der Reduzierung des benötigten technischen Aufwands eine im Vergleich zu gängigen Ladepunkten gleichbleibend hohe Messsicherheit aufrechterhalten, welche mindestens - d.h. in einer kostensparenden zeit- oder fallweisen Erhebung von Messwerten - zur Plausibilisierung - beispielsweise für einen strichprobenartigen Vergleich einer an einem Lademodul punktuell veranlassten Messung mindestens einer elektrischen Grö-ße - fahrzeugseitig festgestellter oder gemessener Werte genutzt werden kann.

## Patentansprüche

1. Lademodul zum elektrischen Laden oder Beladen eines Energiespeichers einer zumindest teilweise elektrisch angetriebenen Transportmaschine, wobei das Lademodul zur örtlich abgesetzten Verbindung an einer mit einem Energieversorgungsnetz verbundenen Kopfbaugruppe vorgesehen ist, das Lademodul umfassend;
- einen zumindest zwei Leiter umfassenden elektrischen Betriebsanschluss zur Stromversorgung des Lademoduls durch die Kopfbaugruppe;
- einen zumindest zwei Leiter umfassenden elektrischen Ladeanschluss zum elektrischen Laden oder Beladen des Energiespeichers durch das Lademodul;
- eine zumindest zwei Leiter umfassende elektrische Schnittstelle zur Übertragung von Steuersignalen; und;
- eine Messvorrichtung zur Messung mindestens einer elektrischen Größe und zur Übertragung eines Werts der gemessenen elektrischen Größe an die Kopfbaugruppe.

2. Lademodul gemäß Patentanspruch 1, wobei die Messvorrichtung so eingerichtet ist, dass die Messung der mindestens einen elektrischen Größe auf Anweisung der Kopfbaugruppe erfolgt.

3. Lademodul gemäß einem der vorgenannten Patentansprüche, wobei die Messvorrichtung so eingerichtet ist, dass die Messung der mindestens einen elektrischen Größe punktuell erfolgt.

4. Lademodul gemäß einem der vorgenannten Patentansprüche, zumindest umfassend einen Anpassungswiderstand und/oder sonstige Einrichtungen zur Pegel- und/oder Signalbeeinflussung von über den Ladeanschluss mitgeführten Datenleitungen.

5. Lademodul gemäß einem der vorgenannten Patentansprüche, umfassend Einrichtungen zur Montage und Arretierung des Lademoduls auf eine Tragschiene.

6. Kopfbaugruppe zur Anbindung einer Mehrzahl örtlich abgesetzter Lademodule über eine zumindest zwei Leiter umfassende elektrische Verbindung, die Kopfbaugruppe umfassend:
- eine Erfassungseinheit, mittels derer ein von mindestens einem Lademodul übertragener Wert einer dort gemessenen elektrischen Größe empfangbar ist, um eine von mindestens einem Lademodul ausgetauschte elektrische Energie zu erfassen; und;
- eine Steuereinheit, mittels der eine zum Betrieb aller Lademodule gelieferte elektrische Leistung steuerbar ist.

7. Ladesystem, umfassend mindestens eine Ladekopfstation gemäß einem der vorgenannten Patentansprüche und eine Mehrzahl von Lademodulen gemäß einem der vorgenannten Patentansprüche.

8. Ladesystem gemäß Patentanspruch 7, **dadurch gekennzeichnet, dass** die Lademodule untereinander im Wesentlichen baugleich, vorzugsweise identisch, sind.
